(19) Europäisches Patentamt
European Patent Office
Office européen des brevets

(11) **EP 4 507 398 A1**

(12) **EUROPEAN PATENT APPLICATION**

(43) Date of publication:
**12.02.2025 Bulletin 2025/07**

(21) Application number: **24191568.5**

(22) Date of filing: **29.07.2024**

(51) International Patent Classification (IPC):
***H04W 52/32*** (2009.01)     ***H04W 52/38*** (2009.01)

(52) Cooperative Patent Classification (CPC):
**H04W 52/325; H04W 52/38; H04W 52/383**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 US 202363531749 P**
**24.07.2024 US 202418783391**

(71) Applicant: **Apple Inc.**
**Cupertino, CA 95014 (US)**

(72) Inventors:
• **YE, Chunxuan**
**Cupertino, 95014 (US)**

• **ZHANG, Dawei**
**Cupertino, 95014 (US)**
• **HE, Hong**
**Cupertino, 95014 (US)**
• **NIU, Huaning**
**Cupertino, 95014 (US)**
• **CUI, Jie**
**Cupertino, 95014 (US)**
• **FAKOORIAN, Seyed Ali Akbar**
**Cupertino, 95014 (US)**
• **ZENG, Wei**
**Cupertino, 95014 (US)**

(74) Representative: **Wardle, Callum Tarn**
**Withers & Rogers LLP**
**2 London Bridge**
**London SE1 9RA (GB)**

(54) **MAINTAINING CHANNEL OCCUPANCY TIME (COT) ON A SIDELINK INTERFACE**

(57)     Disclosed are methods, systems, and computer-readable medium to perform operations including generating a plurality of sidelink synchronization signal blocks (S-SSBs) for transmission on a sidelink unlicensed (SL-U) channel; determining, using a per S-SSB calculation, a transmission power for the plurality of S-SSBs; and transmitting the plurality of S-SSBs using the transmission power.

FIG. 3C

**Description**

**CROSS-REFERENCE TO RELATED APPLICATIONS**

This application claims priority to 63/531,749, filed on August 9, 2023, which is incorporated herein by reference in its entirety.

**BACKGROUND**

Wireless communication networks provide integrated communication platforms and telecommunication services to wireless user devices, called user equipment (UEs). Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5G NR). The wireless communication networks facilitate mobile broadband service using technologies such as OFDM, multiple input multiple output (MIMO), advanced channel coding, massive MIMO, beamforming, and/or other features.

Recent wireless communication networks support device-to-device communications in which UEs communicate directly with one another, e.g., without an intermediary infrastructure device such as a base station. Such peer-to-peer communications utilize a "sidelink" interface facilitated by the wireless communication network. In such communications, a UE that is transmitting a signal on the sidelink interface is referred to as a transmitting UE (TX UE), and a UE receiving the signal is referred to a receiving UE (RX UE).

**BRIEF DESCRIPTION OF THE FIGURES**

FIG. 1A and FIG. 1B each illustrate example slots that include Physical Sidelink Feedback Channel (PSFCH) occasions, according to some implementations.

FIG. 2A illustrates physical resources of a sidelink slot that includes a PSFCH occasion, according to some implementations.

FIG. 2B illustrates physical resources of a sidelink slot that does not include a PSFCH occasion, according to some implementations.

FIG. 3A, 3B, 3C each illustrate example sidelink SSB transmissions, according to some implementations.

FIG. 4 illustrates an example communication system that includes sidelink communications, according to some implementations.

FIG. 5A, FIG. 5B, and FIG. 5C each illustrate a flowchart of an example method, according to some implementations.

FIG. 6 illustrates an example user equipment (UE), according to some implementations.

FIG. 7 illustrates an example access node, according to some implementations.

**DETAILED DESCRIPTION**

One of the features being developed for the latest generation of wireless communication systems is sidelink communications on an unlicensed spectrum (SL-U). The unlicensed spectrum refers to a frequency band, e.g., 5 Gigahertz (GHz) and/or 6 GHz, that is not dedicated or licensed for use by only one technology. Because the frequency band is not dedicated for use by only one technology, UEs operating on the unlicensed spectrum are configured with features for accessing and communicating on the unlicensed spectrum. These features include channel access mechanisms, such as listenbefore-talk (LBT) and channel occupancy time (COT), and channel access requirements, such as the occupied channel bandwidth (OCB) requirement. Generally, the channel access mechanisms involve an initiating UE obtaining access to a sidelink channel on the unlicensed spectrum to communicate with a responding UE. The initiating UE can be a transmitter UE and the responding UE can be a receiving UE, or vice versa.

COT procedures specify that an initiating UE that has accessed an unlicensed spectrum channel will maintain control of the channel until there is a threshold gap in the channel occupancy, e.g., 16 microseconds (us). Such a gap signals to other UEs attempting to access the channel that the channel is no longer occupied. As such, if the initiating UE does not use the channel (e.g., by transmitting or receiving on the channel) for at least 16 us, the UE will lose control of the channel, even if the UE has additional data to transmit or receive. The occupied channel bandwidth (OCB) requirement specifies that an initiating UE must use a threshold percentage of the accessed channel bandwidth (e.g., 80%) when using the channel. If the initiating UE does not satisfy this requirement, then the UE can lose access to the channel.

Although these unlicensed spectrum features have been used in nonsidelink communications, e.g., New Radio-Unlicensed (NR-U), using them for SL-U presents challenges unique to sidelink. One issue is related to the Physical Sidelink Feedback Channel (PSFCH). Before discussing this issue, it is helpful to understand how PSFCH is used in sidelink. Generally, sidelink communications include, in some or all slots, PSFCH occasions for carrying feedback related to the successful or failed reception of a preceding sidelink transmission, e.g., on a Physical Sidelink Shared Channel (PSSCH) or a Physical Sidelink Control Channel (PSCCH).

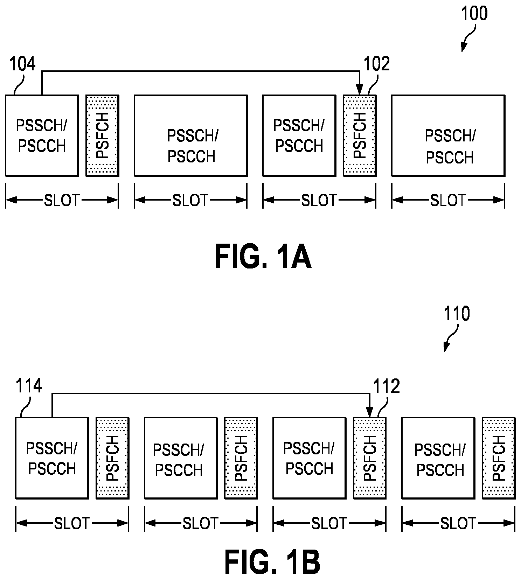

FIG. 1A and FIG. 1B illustrate example sidelink slots 100, 110 that include PSFCH occasions, according to some implementations. The PSFCH occasions can occur periodically (e.g., in every other slot), as shown in FIG. 1A, or can occur in every slot, as shown in FIG. 1B. Each PSFCH occasion can be used by a receiving UE to transmit feedback, e.g., ACK or NACK, related to a preceding sidelink transmission, e.g., a PSSCH or PSCCH transmission. As an example, a PSFCH occasion 102 can carry feedback related to a PSSCH/PSCCH transmission 104 that occurred in two slots before the slot of the PSFCH occasion 102. As another example, a PSFCH occasion 112 can carry feedback related to a PSSCH/PSCCH transmission 114 that occurred in two slots before the slot of the PSFCH occasion 112. However, not all scheduled PSFCH occasions are used. For example, a receiving UE may not have feedback to transmit on the PSFCH, thereby leaving the PSFCH empty.

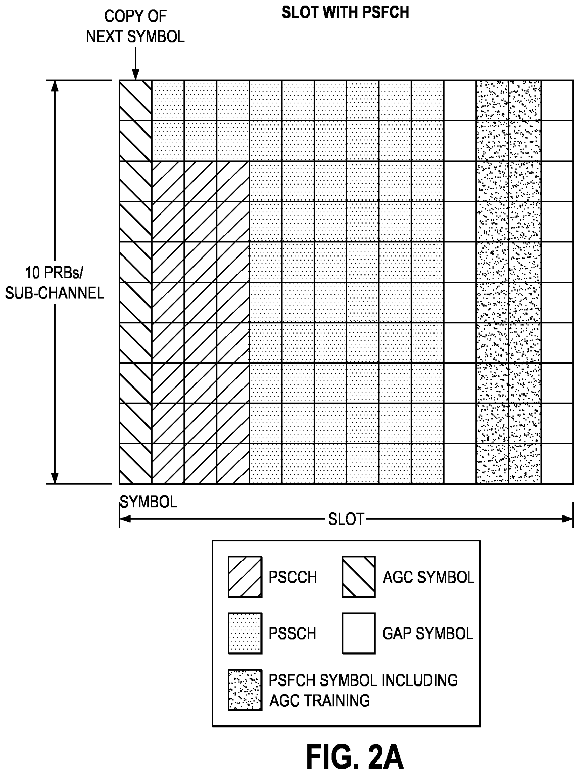

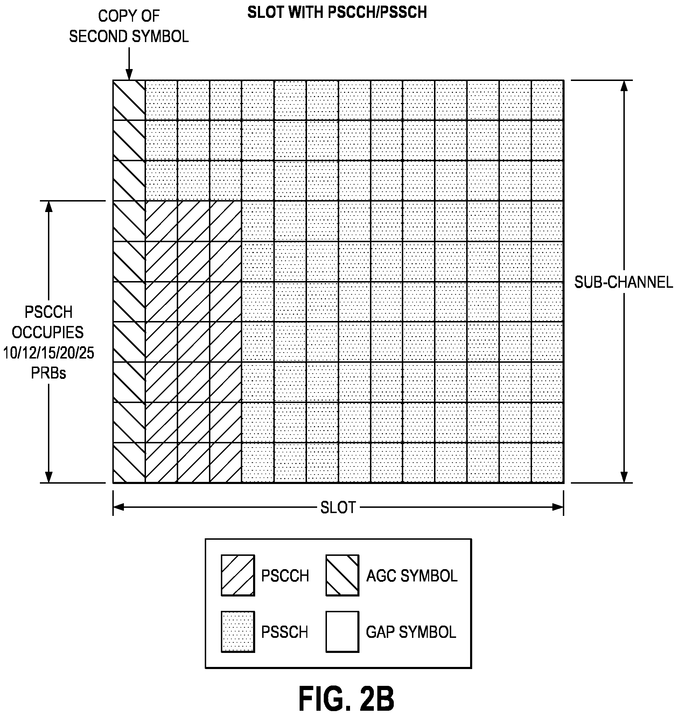

FIG. 2A illustrates physical resources of a sidelink slot that includes a PSFCH occasion, according to some implementations. As shown in FIG. 2A, the slot can include an automatic gain control (AGC) symbol, PSCCH symbols, PSSCH symbols, and two PSFCH symbols. The PSFCH symbols include resources for AGC training. For example, one symbol can be dedicated for AGC training and the other symbol can be dedicated to PSFCH. Further, the slot includes a gap symbol before the PSFCH symbols and a gap symbol after the PSFCH symbols. For reference, FIG. 2B illustrates physical resources of a sidelink slot that does not include a PSFCH occasion.

Returning to the PSFCH related issue that arises in SL-U, the issue stems from PSFCH occasions that are not used. In particular, leaving a PSFCH occasion empty on the unlicensed spectrum may result in an initiating UE losing its access to channel because the UE not transmitting/receiving during the PSFCH occasion may result in a gap greater than the threshold gap for maintaining COT. This occurs even if the initiating UE has additional data to transmit/receive.

Another issue is related to satisfying the OCB requirement in SL-U. The unlicensed spectrum includes 20 Megahertz (MHz) channels called resource block (RB) sets. A sidelink bandwidth part (SL-BWP) can include one or more than one RB set. In either scenario, a transmitting UE must occupy at least threshold percentage of the accessed channel bandwidth to satisfy the OCB requirement. However, some communications may not occupy enough of the one or more RB sets to satisfy the OCB requirement.

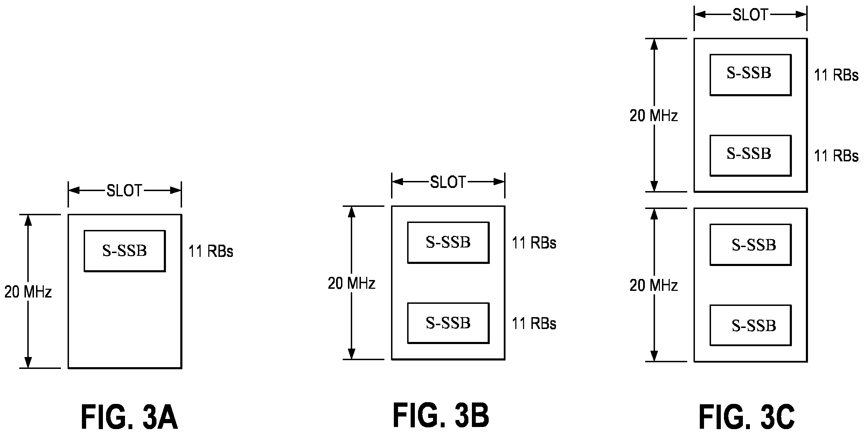

A sidelink synchronization signal block (S-SSB), for example, is transmitted on 11 resource blocks (RBs), as shown in FIG. 3A. To meet the OCB requirement when accessing one RB set, the transmitting UE may repeat the S-SSB in frequency domain in the one RB set, as shown in FIG. 3B. And to meet the OCB requirement when accessing on more than one RB set, the transmitting UE may repeat the S-SSB in each RB set, as shown in FIG. 3C. If the UE only does so on one of the RB sets, the UE may lose control of the other RB sets. However, when repeating the S-SSB transmissions, the transmitting UE cannot use legacy S-SSB parameters (e.g., transmission power) as those parameters do not account for repeating signals. For example, using the same legacy transmission power for each S-SSB transmission will result in failure of the transmissions as the total transmission power will exceed UE capabilities.

This disclosure describes systems and methods for supporting sidelink communications on an unlicensed spectrum. Among other things, this disclosure describes systems and methods for (i) maintaining COT during a PSFCH occasion where there is no PSFCH transmission by using the PSFCH occasion for a different transmission, and (ii) maintaining COT by properly performing simultaneous multiple S-SSB transmissions in one or more RB sets. In particular, using the PSFCH occasion where there is no PSFCH transmission for a different type of transmission allows the initiating UE to maintain access to the channel even if there is no PSFCH transmission. And properly performing simultaneous multiple S-SSB transmissions allows the initiating UE to maintain COT while satisfying OCB requirements when transmitting S-SSB.

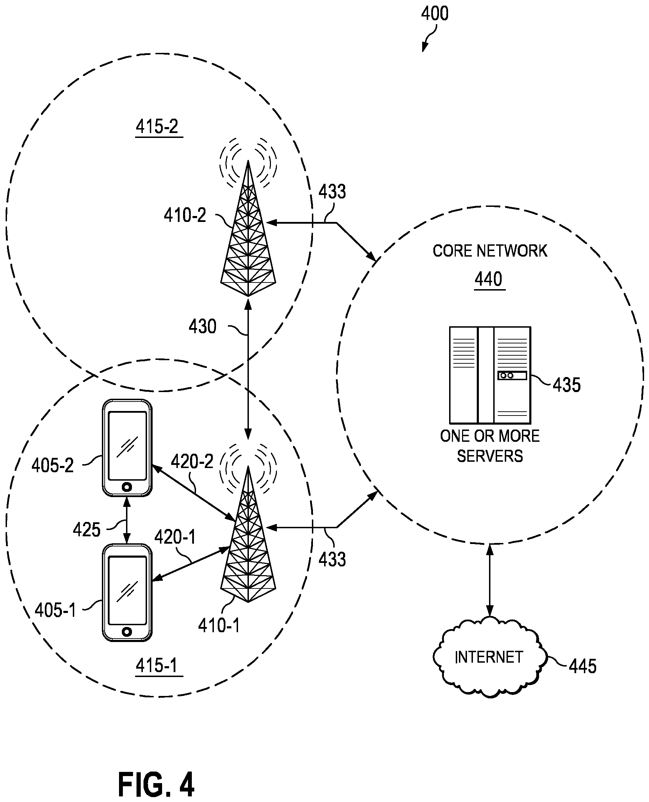

FIG. 4 illustrates an example communication system 400 that includes sidelink communications, according to some implementations. It is noted that the system of FIG. 4 is merely one example of a possible system, and that features of this disclosure may be implemented in other wireless communication systems.

The following description is provided for an example communication system that operates in conjunction with fifth generation (5G) networks as provided by 3GPP technical specifications. However, the example implementations are not limited in this regard and the described examples may apply to other networks that may benefit from the principles described herein, such as 3GPP Long Term Evolution (LTE) networks, and the like. Furthermore, other types of communication standards are possible, including future 3GPP systems (e.g., Sixth Generation (6G)), IEEE 802.16 protocols, or the like. While aspects may be described herein using terminology commonly associated with 5G NR, aspects of the present disclosure can be applied to other systems, such as 4G and/or systems subsequent to 5G (e.g., 6G).

Frequency bands for 5G NR may be separated into two different frequency ranges. Frequency Range 1 (FR1) may include frequency bands operating in sub-6 GHz frequencies, some of which are bands that may be used by previous standards and may potentially be extended to cover new spectrum offerings from 410 MHz to 7125 MHz. Frequency Range 2 (FR2) may include frequency bands from 24.25 GHz to 52.6 GHz. Bands in the millimeter wave (mmWave) range of FR2 may have smaller coverage but potentially higher available bandwidth than bands in the FR1.

As shown, the communication system 400 includes a number of user devices. More specifically, the communication system 400 includes two UEs 405 (UE 405-1 and UE 405-2 are collectively referred to as "UE 405" or "UEs 405"), two base stations 410 (base station 410-1 and base station 410-2 are collectively referred to as "base station 410" or "base stations 410"), two cells 415 (cell 415-1 and cell 415-2 are collectively referred to as "cell 415" or "cells 415"), and one or more servers 435 in a core network (CN) 440 that is connected to the Internet 445.

In some implementations, the UEs 405 can directly communicate with base stations 410 via links 420 (link 420-1 and link 420-2 are collectively referred to as "link 420" or "links 420"), which utilize a direct interface with the base stations referred to as a "Uu interface." Each of the links 420 can represent one or more channels. The links 420 are illustrated as an air interface to enable communicative coupling, and can be consistent with cellular communication protocols, such as a 3GPP LTE protocol, an Advanced long term evolution (LTE-A) protocol, a LTE-based access to unlicensed spectrum (LTE-U), a 5G protocol, a NR protocol, an NR-based access to unlicensed spectrum (NR-U) protocol, and/or any of the other communications protocols discussed herein.

As shown, certain user devices may be able to conduct communications with one another directly, e.g., without an intermediary infrastructure device such as base station 410-1. In this example, UE 405-1 may conduct communications directly with UE 405-2. Similarly, the UE 405-2 may conduct communications directly with UE 405-1. Such peer-to-peer communications may utilize a "sidelink" interface such as a PC5 interface. In certain implementations, the PC5 interface supports direct cellular communication between user devices (e.g., between UEs 405), while the Uu interface supports cellular communications with infrastructure devices such as base stations. For example, the UEs 405 may use the PC5 interface for a radio resource control (RRC) signaling exchange between the UEs (also called PC5-RRC signaling). The PC5/Uu interfaces are used only as an example, and PC5 as used herein may represent various other possible wireless communications technologies that allow for direct sidelink communications between user devices, while Uu in turn may represent cellular communications conducted between user devices and infrastructure devices, such as base stations.

To transmit/receive data to/from one or more base stations 410 or UEs 405, the UEs 405 may include a transmitter/receiver (or alternatively, a transceiver), memory, one or more processors (e.g., baseband processors), and/or other like components that enable the UEs 405 to operate in accordance with one or more wireless communications protocols and/or one or more cellular communications protocols. The UEs 405 may have multiple antenna elements that enable the UEs 405 to maintain multiple links 420 and/or sidelinks 425 to transmit/receive data to/from multiple base stations 410 and/or multiple UEs 405. For example, as shown in FIG. 4, UE 405-1 may connect with base station 410-1 via link 420 and simultaneously connect with UE 405-2 via sidelink 425.

In some implementations, one or more sidelink radio bearers may be established on the sidelink 425. The sidelink radio bearers can include signaling radio bearers (SL-SRB) and/or data radio bearers (SL-DRB).

The PC5 interface may alternatively be referred to as a sidelink interface and may include one or more logical channels, including but not limited to a Physical Sidelink Control Channel (PSCCH), a Physical Sidelink Shared Channel (PSSCH), a Physical Sidelink Discovery Channel (PSDCH), a Physical Sidelink Broadcast Channel (PSBCH), Physical Sidelink Feedback Channel (PSFCH), and/or any other like communications channels. The PSFCH carries feedback related to the successful or failed reception of a sidelink transmission. The PSSCH can be scheduled by sidelink control information (SCI) carried in the sidelink PSCCH. In some examples, the sidelink interface can operate on an unlicensed spectrum (e.g., in the unlicensed 5 GHz and 6 GHz bands) or a (licensed) shared spectrum.

In one example, the sidelink interface implements vehicle-to-everything (V2X) communications. The V2X communications may, for example, adhere to 3GPP Cellular V2X (C-V2X) specifications, or to one or more other or subsequent standards whereby vehicles and other devices and network entities may communicate. V2X communications may utilize both long-range (e.g., cellular) communications as well as short- to medium-range (e.g., non-cellular) communications. Cellular-capable V2X communications may be called Cellular V2X (C-V2X) communications. C-V2X systems may use various cellular radio access technologies (RATs), such as 4G LTE or 5G NR RATs (or RATs subsequent to 5G, e.g., 6G RATs). Certain LTE standards usable in V2X systems may be called LTE-Vehicle (LTE-V) standards. As used herein in the context of V2X systems, and as defined above, the term "user devices" may refer generally to devices that are associated with mobile actors or traffic participants in the V2X system, e.g., mobile (able-to-move) communication devices such as vehicles, pedestrian user equipment (PUE) devices, and road side units (RSUs).

In some implementations, UEs 405 may be physical hardware devices capable of running one or more applications, capable of accessing network services via one or more radio links 420 with a corresponding base station 410 (also referred to as a "serving" base station), and capable of communicating with one another via sidelink 125. Link 420 may allow the UEs 405 to transmit and receive data from the base station 410 that provides the link 420. The sidelink 425 may allow the UEs 405 to transmit and receive data from one another. The sidelink 425 between the UEs 405 may include one or more channels for transmitting information from UE 405-1 to UE 405-2 and vice versa and/or between UEs 405 and UE-type RSUs and vice versa.

In some implementations, the base stations 410 are capable of communicating with one another over a backhaul connection 430 and may communicate with the one or more servers 435 within the CN 440 over another backhaul connection 433. The backhaul connections can be wired and/or wireless connections.

In some implementations, the UEs 405 are configured to use a resource pool for sidelink communications. A sidelink resource pool defines the time-frequency resources used for sidelink communications, and may be divided into multiple time slots, frequency channels, and frequency sub-channels. In some examples, the UEs 405 are synchronized and perform sidelink transmissions aligned with slot boundaries. A UE may be expected to select several slots and sub-channels for transmission of the transport block. In some examples, a UE may use different sub-channels for transmission of the transport block across multiple slots within its own resource selection window.

In some implementations, an exceptional resource pool may be configured for the UEs 405, perhaps by the base stations 410. The exceptional resource pool includes resources that the UEs 405 can use in exceptional cases, such as Radio Link Failure (RLF). The exceptional resource pool may include resources selected based on a random allocation of resources.

In some implementations, the UEs 405 may be configured with parameters for communicating via the Uu interface and/or the sidelink interface. In some examples, the UEs 405 may be "pre-configured" with some parameters. In these examples, the parameters may be hardwired into the UEs 405 or coded into spec. Additionally and/or alternatively, the UEs 405 may be configured by receiving the parameters from the one or more of the base stations 410. In this disclosure, the phrase "(pre)configured" means that UE is either pre-configured or configured by a base station. "(Pre) configured per resource pool" indicates that a resource pool is configured when the device is produced. Here, the resource pool configuration is not from the network, but from device OEM. This (pre)configuration allows sidelink communication in the area without network coverage.

In some implementations, a UE that is initiating a communication with another UE on a sidelink unlicensed spectrum is referred to as the initiating UE or the COT initiating UE, and the other UE is referred as the responding UE. The initiating UE may be a receiver UE and the responding UE may be a transmitter UE, or the initiating UE may be a transmitter UE and the responding UE may be a receiver UE. Although FIG. 4 illustrates a single TX UE communicating with a single RX UE, a TX UE may communicate with more than one RX UE via sidelink.

In some implementations, a TX UE that is initiating sidelink communication may determine the available resources (e.g., sidelink resources) and may select a subset of these resources to communicate with an RX UE based on a resource allocation scheme. Example resource allocation schemes include Mode 1 and Mode 2 resource allocation schemes. In Mode 1 resource allocation scheme (referred to as "Mode 1"), the resources are allocated by a network node for in-coverage UEs. In Mode 2 resource allocation scheme (referred to as "Mode 2"), the TX UE selects the sidelink resources (e.g., sidelink transmission resources).

In some implementations, the communication system 400 supports different cast types, including unicast, broadcast, and groupcast (or multicast) communications. Unicast refers to direction communications between two UEs. Broadcast refers to a communication that is broadcast by a single UE to a plurality of other UEs. Groupcast refers to communications that are sent from a single UE to a set of UEs that satisfy a certain condition (e.g., being a member of a particular group).

In some implementations, the UEs 405 are configured such that a PSCCH/PSSCH transmission has "N" associated candidate PSFCH occasion(s). The value range of N includes at least {1, 2, 3, 4}. Further, the value of N can be defined by (pre)configuration. When N>1, the N associated PSFCH occasions for one PSCCH/PSSCH transmission have different time and/or frequency resources with the candidate PSFCH occasion(s) for another PSCCH/PSSCH transmission, at least if the two PSCCH/PSSCH transmissions are on non-overlapped resources. In SL-U, a PSFCH occasion can include on a common interlace and dedicated physical resource blocks (PRBs) in one or more PSFCH symbols in a slot.

In line with the discussion above, this disclosure describes systems and methods that enable an initiating UE to maintain COT during a PSFCH occasion where there is no PSFCH transmission by transmitting a different type of signal in the PSFCH occasion. In some implementations, a transmitting UE is configured to use a PSSCH transmission to fill an (otherwise empty) PSFCH occasion. The design of the PSSCH transmission and options for indicating the transport block size (TBS) to the receiving UE are described in more detail below. In other implementations, either the transmitting UE or the receiving UE uses a PSFCH-like sequence to fill the (otherwise empty) PSFCH occasion. The design of the PSFCH-like sequence (also called a dummy PSFCH signal) is described in more detail below.

In some implementations, a PSFCH-like signal is transmitted in an unused PSFCH occasion. An unused PSFCH occasion is one where there is no PSFCH signal to be transmitted in the occasion. Within examples, the UEs 405 are configured with different options for selecting the UE that transmits the PSFCH-like signal. In a first option, the UE that transmits the PSFCH-like signal is a COT initiating UE. In a second option, the UE that transmits the PSFCH-like signal is a transmitting UE (e.g., PSSCH transmitting UE). In a third option, the UE that transmits the PSFCH-like signal is a receiving UE (e.g., PSSCH receiving UE). In a fourth option, which UE is to transmit the PSFCH-like signal is dynamically indicated by the PSSCH transmitting UE in either: (i) an SCI of the PSSCH that occurs before the PSFCH occasion, or (ii) in an SCI of a COT initiating PSSCH transmission. The COT-initiating transmission refers the first PSCCH/PSSCH transmission which starts a COT to be shared with other UEs. In some examples, which of the one or more options is used from the previously listed options is based on a resource pool (pre)configuration.

In some implementations, the UEs 405 are configured with one or more parameters that specify the design of the PSFCH-like signal. A first parameter is the portion of the PSFCH resource on which the PSFCH-like signal is transmitted. For the case where each PSFCH transmission occupies 1 common interlace and K3 dedicated PRB(s), in a first option, the PSFCH-like signal is only transmitted on a common interlace for the PSFCH and not on the dedicated PRBs for the PSFCH. In a second option, the PSFCH-like signal is transmitted on both the common interlace and the dedicated PRBs for the PSFCH.

For the case where each PSFCH transmission occupies 1 dedicated interlace, the PSFCH-like signal occupies a dedicated interlace, while the PSFCH sequence is generated by using a (pre-)configured cyclic shift value.

A second parameter is a cyclic shift (mcs) value for the PSFCH-like signal. In a first option, the cyclic shift (mcs) is predefined, e.g., equal to 0. In a second option, the cyclic shift (mcs) is (pre)configured per resource pool. In a third option, the cyclic shift (mcs) depends on a source ID and/or a destination ID of the COT-initiating PSCCH/PSSCH transmissions.

A third parameter is a cyclic shift initialization parameter ($m_0$) of the PSFCH-like signal. In a first option, the cyclic shift ($m_0$) is predefined, e.g., equal to 0. In a second option, the cyclic shift ($m_0$) is (pre)configured per resource pool. In a third option, the cyclic shift ($m_0$) depends on the number of cyclic shift pairs and source ID and/or destination ID of the COT-initiating transmissions. In a fourth option, the cyclic shift ($m_0$) depends on the number of cyclic shift pairs and the PSSCH/PSCCH transmission time-frequency resources. The total number of cyclic shift pairs is (pre-)configured by resource pool. The selection of cyclic shift pair index depends on group member ID (M_{ID}) and physical layer source ID (P_{ID}). The selection is described in more detail in Section 16.3.0 of TS 38.213. Generally, the PSSCH/PSCCH transmission time-frequency resources refer to the resources of the PSSCH/PSCCH transmission associated with the PSFCH occasion. For a PSFCH occasion, its associated PSCCH/PSSCH resources may be in several slots and over different frequency sub-channels. Depending on which slot and which subchannel of PSCCH/PSSCH, the $m_0$ of the associated PSFCH can be determined.

In some implementations, a transmitting UE is configured to transmit PSSCH on the (otherwise empty) PSFCH occasion. In these implementations, the transmitting UE is configured to transmit a 1-bit indication that indicates to a receiving UE whether PSSCH is extended to a subsequent PSFCH occasion. In some examples, the transmitting UE is configured with one or more options for transmitting the 1-bit indication. In a first option, the transmitting UE is configured to dynamically indicate the 1-bit in an SCI of the PSSCH before the relevant PSFCH occasion. In a second option, the transmitting UE is configured to dynamically indicate the 1-bit in an SCI of the initiating PSSCH transmission. In the first and second options, the SCI can be a Stage 1 or a Stage 2 SCI. In some examples, whether the first or second option is used depends on a resource pool (pre-)configuration.

In some implementations, the transmitting UE is configured to transmit the PSSCH with particular slot structure on the PSFCH occasion. In some examples, both the two symbols of PSFCH and the gap symbol before the PSFCH are used for PSSCH transmissions.

In some implementations, the transmitting UE is configured with one or more options for indicating the TBS for the PSSCH transmission to the receiving UE in SCI Stage 1 of the PSSCH before the PSFCH occasion. In a first option, a "PSFCH overhead indication" bit in SCI Stage 1 is set to "0." This means that $N_{symb}^{PSFCH} = 0$ = 0 and that the PSSCH transmission can use all of the symbols previously dedicated to PSFCH in the current slot. Note that this field applies to the scenario where there is a scheduled PSFCH in the slot, e.g., °sl-PSFCH-Period =1". Accordingly, if the higher layer parameter °sl-PSFCH-Period" is 0, then $N_{symb}^{PSFCH}$. Otherwise, $N_{symb}^{PSFCH} = 0$ if a "PSFCH overhead indication" field in SCI Stage 1 is set to 0, or $N_{symb}^{PSFCH} = 3$ if "PSFCH overhead indication" in SCI Stage 1 is set to 1.

In a second option, the transmitting UE is configured to use a new SCI bit field, e.g., a "PSFCH filling" field to indicate the TBS for the PSSCH transmission to the receiving UE. The new SCI bit field can be included in SCI Stage 1 or SCI Stage 2. In this option, if the higher layer parameter °sl-PSFCH-Period" is 0 or the "PSFCH filling" field is set to 1, then

$$N_{symb}^{PSFCH} = 0$$ . Otherwise, $$N_{symb}^{PSFCH} = 0$$ if the "PSFCH overhead indication" field in SCI Stage 1 is set to 0, or $$N_{symb}^{PSFCH} = 3$$ if "PSFCH overhead indication" in SCI Stage 1 is set to 1.

In some implementations, a UE, e.g., a transmitting UE, is configured to control transmission power for S-SSB transmissions in S-SSB repetition scenarios. In particular, the UE is configured with one or more power control equations that enable the UE to calculate the transmission power for the S-SSB transmissions. The power control equations allow the UE to transmit S-SSB repetitions that satisfy OCB requirements without exceeding UE capabilities. By way of background, the formula for normal (legacy) S-SSB transmission power is specified in 3GPP TS 38.213 V17.6.0 as:

$$P_{S-SSB}(i) = min(P_{CMAX}, P_{O,S-SSB} + 10log_{10}(2^{\mu} \cdot M_{RB}^{S-SSB} + \alpha_{S-SSB} \cdot PL)). \quad [1]$$

In Equation [1], PCMAX is a maximum transmission power of the UE, $P_{O,S-SSB}$ is a value of dl-P0-PSBCH if provided; else $P_{S-SSB}(i) = P_{CMAX}$. dl-P0-PSBCH is a (pre-)configured received power target assuming full pathloss compensation (also called base power). Further, $\alpha_{S-SSB}$ is a value of dl-Alpha-PSBCH if provided; else, $\alpha_{S-SSB} = 1$. dl-Alpha-PSBCH is the fractional power control factor. And $M_{RB}^{S-SSB}$ is a number of resource blocks for S-SSB transmission with $\mu$ = subcarrier spacing (SCS), and PL is the downlink path loss. In one example, $M_{RB}^{S-SSB} = 11$

In some implementations, a UE is configured with one or more options for S-SSB transmission power control. In a first option, the transmission power is calculated on a per S-SSB basis. Here, the UE uses a power equation to calculate the power for each S-SSB transmission. In one example, the UE is configured with a power control equation for calculating the power in an anchor RB set. An anchor RB set refers to the RB set where the S-SSB indicated by a network provided information element (IE), e.g., *sl-AbsoluteFrequencySSB-rl6,* is located. Additionally, the UE can be configured with another power control equation for calculating power in the other (non-anchor) RB sets.

In an example, the equation for calculating S-SSB transmission power in an anchor RB set in which S-SSB repetition is applied is:

$$P_{S-SSB}^{anchor}(i) = min \left( P_{CMAX} - 10log_{10}(N), P_{O,S-SSB} + 10log_{10}\left(2^{\mu} \cdot M_{RB}^{S-SSB} + \alpha_{S-SSB} \cdot PL\right)\right). \quad [2]$$

In Equation [2], N is the (pre)configured number of S-SSB repetitions in the anchor RB set.

In an example, the S-SSB transmission power in a non-anchor RB set where S-SSB repetition is applied is:

$$P_{S-SSB}^{non-anchor}(i) = min(P_{CMAX} - N \cdot P_{S-SSB}^{anchor}(i) - (N \cdot M)log_{10}(N \cdot M), P_{O,S-SSB} + 10log_{10}(2^{\mu} \cdot M_{RB}^{S-SSB} + \alpha_{S-SSB} \cdot PL)). \quad [3]$$

In Equation [3], N is the (pre)configured number of S-SSB repetitions in the anchor RB set, and M is (the total number of RB sets to be used for S-SSB transmissions - 1). As shown by this equation, the UE equally allocates between the non-anchor RB sets the available or remaining power from the maximum transmission power of a UE after the power allocated to the anchor RB set is deducted (e.g., the difference between the maximum transmission power of a UE and the transmission power for the anchor RB set).

In a second option, the transmission power is defined on a per RB set basis. In this option, the power equation is used to calculate the S-SSB transmission power in an entire RB set (e.g., for all repetitions in the RB set). In an example, the equation for calculating the power on a per RB set basis is:

$$P_{S-SSB}(i) = min(P_{CMAX}, P_{O,S-SSB} + 10log_{10}(2^{\mu} \cdot M_{RB}^{S-SSB} \cdot N + \alpha_{S-SSB} \cdot PL)). \quad [4]$$

In Equation [4], P$_{CMAX}$ is the maximum transmission power of the UE, and $P_{O,S-SSB}$ is a value of dl-P0-PSBCH if provided; else $P_{S-SSB}(i) = P_{CMAX}$. Further, $\alpha_{S-SSB}$ is a value of dl-Alpha-PSBCH if provided; else, $\alpha_{S-SSB} = 1$. Furthermore, $M_{RB}^{S-SSB}$ is a number of resource blocks for S-SSB transmission with $\mu$ = SCS, and PL is the downlink path loss. In an example, $M_{RB}^{S-SSB} = 11$ . Yet further, N is the (pre)configured number of S-SSB repetitions in the anchor RB set.

In a third option, the power equation is defined on a per slot basis. In this option, the power equation is used to calculate the S-SSB transmission power for all the S-SSBs in a particular slot. In an example, the equation for calculating the power on a per slot basis is:

$$P_{S-SSB}(i) = min(P_{CMAX}, P_{0,S-SSB} + 10log_{10}(2^{\mu} \cdot M_{RB}^{S-SSB} \cdot N \cdot M + \alpha_{S-SSB} \cdot PL)). \ [5]$$

In Equation [5], N is the (pre)configured number of S-SSB repetitions in the anchor RB set (which is the same number of repetitions that will be applied in each additional RB set), and M is the number of RB sets to be used for S-SSB transmissions.

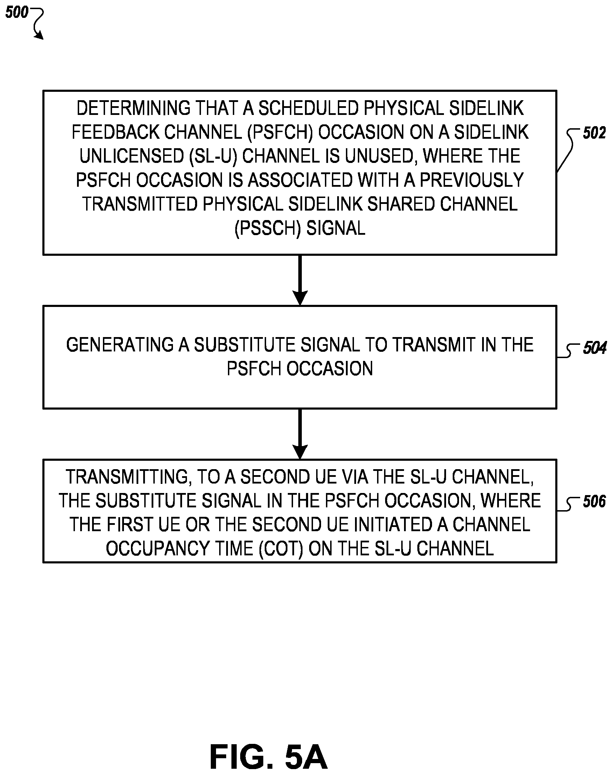

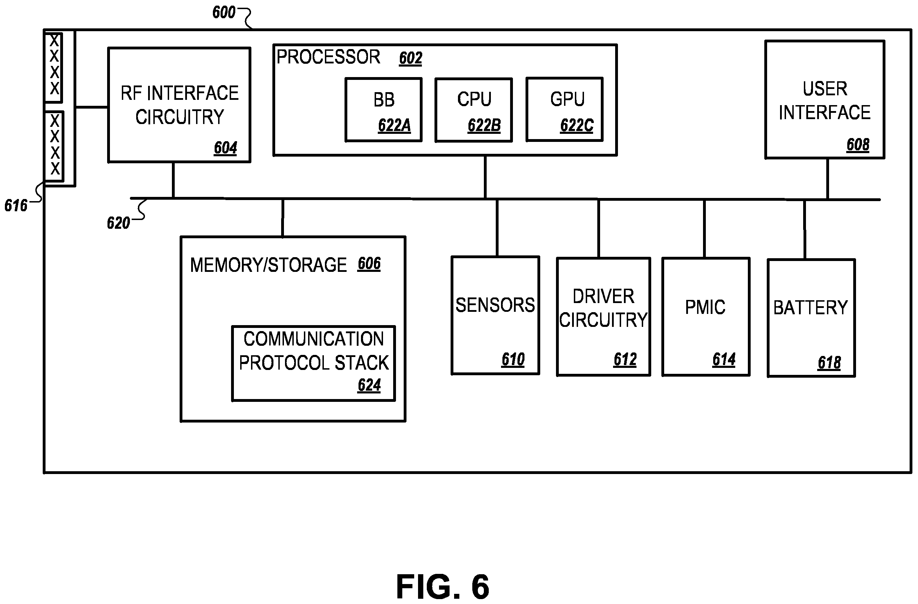

FIG. 5A illustrates a flowchart of an example method 500, according to some implementations. For clarity of presentation, the description that follows generally describes method 500 in the context of the other figures in this description. For example, method 500 can be performed by a UE of FIG. 6. It will be understood that method 500 can be performed, for example, by any suitable system, environment, software, hardware, or a combination of systems, environments, software, and hardware, as appropriate. In some implementations, various steps of method 500 can be run in parallel, in combination, in loops, or in any order. In some implementations, method 500 can be performed by a UE.

At step 502, method 500 involves determining that a scheduled Physical Sidelink Feedback Channel (PSFCH) occasion on a sidelink unlicensed (SL-U) channel is unused, where the PSFCH occasion is associated with a previously transmitted Physical Sidelink Shared Channel (PSSCH) signal.

In some implementations, if the UE is a TX UE, then the UE can determine that the PSFCH occasion is unused because the TX UE did not request SL HARQ feedback (e.g., which is indicated in an SCI associated with the PSSCH transmission). The UE can also determine that the PSFCH occasion is unused if the PSFCH occasion occurs at the beginning of a COT and the PSFCH occasion is associated with some PSSCH transmissions before COT initiating (considering the time gap between PSSCH and its associated PSFCH). In some examples, if the UE is an RX UE, then the RX UE can determine that the PSFCH occasion is unused if the RX UE did not receive a request for SL HARQ feedback from the TX UE. Other examples are also possible.

At step 504, method 500 involves generating a substitute signal to transmit in the PSFCH occasion.

At step 506, method 500 involves transmitting, to a second UE via the SL-U channel, the substitute signal in the PSFCH occasion, where the first UE or the second UE initiated a channel occupancy time (COT) on the SL-U channel.

In some implementations, the substitute signal is a dummy PSFCH signal.

In some implementations, the PSFCH occasion includes a common interlace and a dedicated physical resource block (PRB), and where transmitting the substitute signal in the PSFCH occasion involves transmitting the dummy PSFCH signal on: (i) the common interlace, or (ii) the common interlace and the dedicated PRB.

In some implementations, generating the substitute signal involves generating the dummy PSFCH signal based on a cyclic shift value and a cyclic shift initialization value.

In some implementations, the cyclic shift value: is a predefined value, is a preconfigured value per resource pool, or depends on at least one of a source ID and a destination ID of a transmission that initiated the COT on the SL-U channel.

In some implementations, the cyclic shift initialization value: is a predefined value, is a preconfigured value per resource pool, depends on a number of cyclic shift pairs and at least one of a source ID and a destination ID of a transmission that initiated the COT on the SL-U channel, or depends on the number of cyclic shift pairs and time-frequency resources of the previously transmitted PSSCH signal.

In some implementations, the first UE is the COT initiating UE, the PSSCH signal transmitting UE, or the PSSCH signal receiving UE.

In some implementations, the method further involves receiving, in a sidelink control information (SCI) message and from the second UE, an indication that the first UE is to transmit the dummy PSFCH signal, where the SCI message is associated with a preceding PSSCH signal to the PSFCH occasion or with a COT initiating PSSCH transmission.

In some implementations, the substitute signal includes an extension of a preceding PSSCH signal to the PSFCH occasion.

In some implementations, the method further involves transmitting, in a sidelink control information (SCI) message and to the second UE, an indication that the preceding PSSCH signal is being extended to the PSFCH occasion.

In some implementations, the SCI message is an SCI Stage 1 message or an SCI Stage 2 message.

In some implementations, transmitting the substitute signal in the PSFCH occasion involves transmitting the preceding PSSCH signal extension in one or more symbols of the PSFCH occasion and a gap symbol preceding the PSFCH occasion.

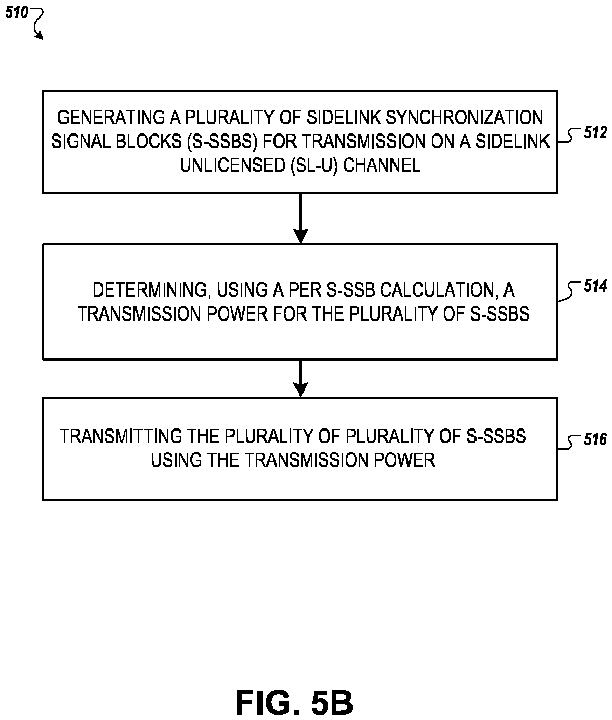

FIG. 5B illustrates a flowchart of an example method 510, according to some implementations. For clarity of presentation, the description that follows generally describes method 510 in the context of the other figures in this description. For example, method 510 can be performed by a UE of FIG. 6. It will be understood that method 510 can be performed, for example, by any suitable system, environment, software, hardware, or a combination of systems, environments, software, and hardware, as appropriate. In some implementations, various steps of method 510 can be run in parallel, in combination, in loops, or in any order.

At step 512, method 510 involves generating a plurality of sidelink synchronization signal blocks (S-SSBs) for transmission on a sidelink unlicensed (SL-U) channel.

At step 514, method 510 involves determining, using a per S-SSB calculation, a transmission power for the plurality of S-SSBs.

At step 516, method 510 involves transmitting the plurality of S-SSBs using the transmission power.

In some implementations, determining, using a per S-SSB calculation, a transmission power for the plurality of S-SSBs involves calculating, using a first equation, a first transmission power for a first subset of the plurality of S-SSBs for transmission on an anchor RB set.

In some implementations, the first equation depends on a number of S-SSB repetitions in the anchor RB set.

In some implementations, the number of S-SSB repetitions in the RB set is configured by a network serving the UE.

In some implementations, the first equation includes a difference between a maximum transmission power of the UE ($P_{CMAX}$) and a 10-based logarithm of a number of S-SSB repetitions in the anchor RB set ($\log10 (N)$).

In some implementations, determining, using a per S-SSB calculation, a transmission power for the plurality of S-SSBs further involves calculating, using a second equation different than the first equation, a second transmission power for a second subset of the plurality of S-SSBs for transmission on a non-anchor RB set.

In some implementations, the second equation includes a total number of RB sets to be used for S-SSB transmissions.

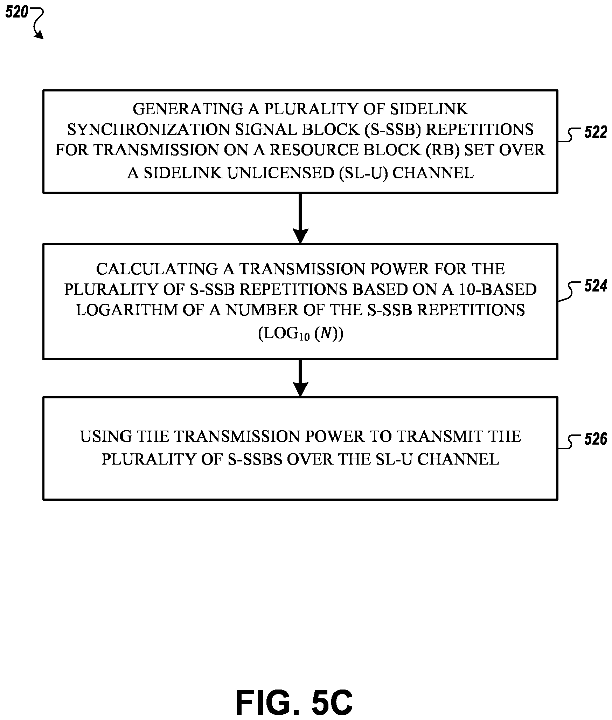

FIG. 5C illustrates a flowchart of an example method 520, according to some implementations. For clarity of presentation, the description that follows generally describes method 520 in the context of the other figures in this description. For example, method 520 can be performed by a UE of FIG. 6. It will be understood that method 520 can be performed, for example, by any suitable system, environment, software, hardware, or a combination of systems, environments, software, and hardware, as appropriate. In some implementations, various steps of method 520 can be run in parallel, in combination, in loops, or in any order.

At step 514, method 510 involves generating a plurality of sidelink synchronization signal block (S-SSB) repetitions for transmission on a resource block (RB) set over a sidelink unlicensed (SL-U) channel.

At step 514, method 510 involves calculating a transmission power for the plurality of S-SSB repetitions based on a 10-based logarithm of a number of the S-SSB repetitions ($\log10 (N)$).

At step 516, method 510 involves using the transmission power to transmit the plurality of S-SSBs over the SL-U channel.

In some implementations, the RB set is an anchor RB set.

In some implementations, calculating a transmission power for the plurality of S-SSB repetitions based on a 10-based logarithm of a number of the S-SSB repetitions ($\log10 (N)$) involves calculating the transmission power based on a difference between a maximum transmission power of the UE ($P_{CMAX}$) and the $\log10 (N)$.

In some implementations, calculating a transmission power for the plurality of S-SSB repetitions based on a 10-based logarithm of a number of the S-SSB repetitions ($\log10 (N)$) involves calculating the transmission power using:

$$10log_{10}(N), P_{O,S-SSB} + 10log_{10}(2^{\mu} \cdot M_{RB}^{S-SSB} + \alpha_{S-SSB} \cdot PL))$$ .

In some implementations, the method further involves receiving the number of S-SSB repetitions from a network serving the UE.

In some implementations, the number of S-SSB repetitions is received via Radio Resource Control (RRC) signaling.

FIG. 6 illustrates an example UE 600, according to some implementations. The UE 600 may be similar to and substantially interchangeable with UEs 405 of FIG. 4.

The UE 600 may be any mobile or non-mobile computing device, such as, for example, mobile phones, computers, tablets, wearable devices (for example, a smart watch), relaxed-IoT devices.

The UE 600 may include processor 602, RF interface circuitry 604, memory/storage 606, user interface 608, sensors 610, driver circuitry 612, power management integrated circuit (PMIC) 614, one or more antenna(s) 616, and battery 618. The components of the UE 600 may be implemented as integrated circuits (ICs), portions thereof, discrete electronic devices, or other modules, logic, hardware, software, firmware, or a combination thereof. The block diagram of FIG. 6 is intended to show a high-level view of some of the components of the UE 600. However, some of the components shown may be omitted, additional components may be present, and different arrangement of the components shown may occur in other implementations.

The components of the UE 600 may be coupled with various other components over one or more interconnects 620, which may represent any type of interface, input/output, bus (local, system, or expansion), transmission line, trace, optical connection, etc. that allows various circuit components (on common or different chips or chipsets) to interact with one another.

The processor 602 may include one or more processors. For example, the processor 602 may include processor circuitry such as, for example, baseband processor circuitry (BB) 622A, central processor unit circuitry (CPU) 622B, and graphics processor unit circuitry (GPU) 622C. The processor 602 may include any type of circuitry or processor circuitry that executes or otherwise operates computer-executable instructions, such as program code, software modules, or functional processes from memory/storage 606 to cause the UE 600 to perform operations as described herein.

In some implementations, the baseband processor circuitry 622A may access a communication protocol stack 624 in the memory/storage 606 to communicate over a 3GPP compatible network. In general, the baseband processor circuitry 622A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 604. The baseband processor circuitry 622A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 606 may include one or more non-transitory, computer-readable media that includes instructions (for example, communication protocol stack 624) that may be executed by the processor 602 to cause the UE 600 to perform various operations described herein. The memory/storage 606 include any type of volatile or non-volatile memory that may be distributed throughout the UE 600. In some implementations, some of the memory/storage 606 may be located on the processor 602 itself (for example, L1 and L2 cache), while other memory/storage 606 is external to the processor 602 but accessible thereto via a memory interface. The memory/storage 606 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 604 may include transceiver circuitry and radio frequency front module (RFEM) that allows the UE 600 to communicate with other devices over a radio access network. The RF interface circuitry 604 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 616 and proceed to filter and amplify (with a low-noise amplifier) the signal. The signal may be provided to a receiver of the transceiver that downconverts the RF signal into a baseband signal that is provided to the baseband processor.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 616. In various implementations, the RF interface circuitry 604 may be configured to transmit/receive signals in a manner compatible with NR access technologies.

The antenna(s) 616 may include one or more antenna elements to convert electrical signals into radio waves to travel through the air and to convert received radio waves into electrical signals. The antenna elements may be arranged into one or more antenna panels. The antenna(s) 616 may have antenna panels that are omnidirectional, directional, or a combination thereof to enable beamforming and multiple input, multiple output communications. The antenna(s) 616 may include microstrip antennas, printed antennas fabricated on the surface of one or more printed circuit boards, patch antennas, phased array antennas, etc. The antenna(s) 616 may have one or more panels designed for specific frequency bands including bands in FR1 or FR2.

The user interface 608 includes various input/output (I/O) devices designed to enable user interaction with the UE 600. The user interface 608 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 600.

The sensors 610 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 612 may include software and hardware elements that operate to control particular devices that are embedded in the UE 600, attached to the UE 600, or otherwise communicatively coupled with the UE 600. The driver circuitry 612 may include individual drivers allowing other components to interact with or control various input/output (I/O) devices that may be present within, or connected to, the UE 600. For example, driver circuitry 612 may include a display driver to control and allow access to a display device, a touchscreen driver to control and allow access to a touchscreen interface, sensor drivers to obtain sensor readings of sensors 610 and control and allow access to sensors 610, drivers to obtain actuator positions of electro-mechanic components or control and allow access to the electro-mechanic components, a camera driver to control and allow access to an embedded image capture device, audio drivers to control and allow access to one or more audio devices.

The PMIC 614 may manage power provided to various components of the UE 600. In particular, with respect to the processor 602, the PMIC 614 may control powersource selection, voltage scaling, battery charging, or DC-to-DC conversion.

In some implementations, the PMIC 614 may control, or otherwise be part of, various power saving mechanisms of the UE 600. A battery 618 may power the UE 600, although in some examples the UE 600 may be mounted deployed in a fixed location, and may have a power supply coupled to an electrical grid. The battery 618 may be a lithium ion battery, a metal-air battery, such as a zinc-air battery, an aluminum-air battery, a lithium-air battery, and the like. In some implementations, such as in vehiclebased applications, the battery 618 may be a typical lead-acid automotive battery.

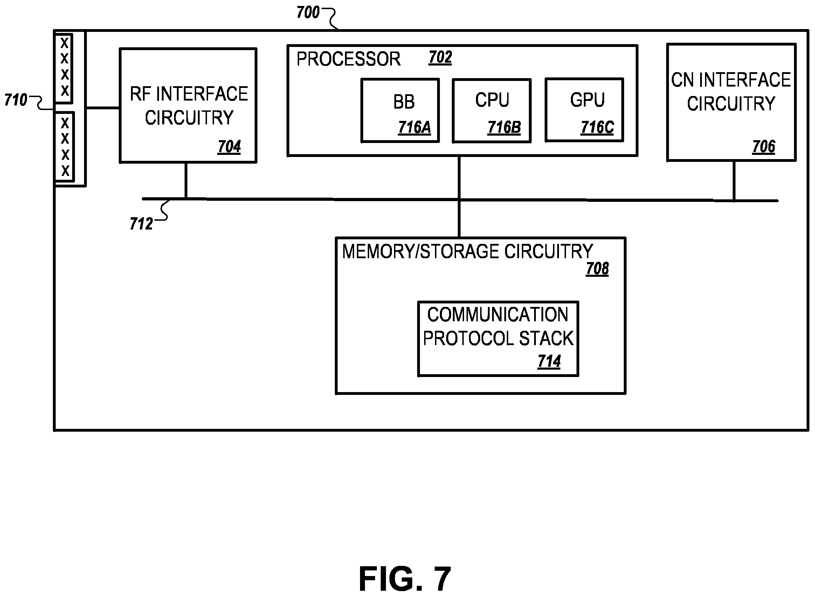

FIG. 7 illustrates an example access node 700 (e.g., a base station or gNB), according to some implementations. The access node 700 may be similar to and substantially interchangeable with base stations 410. The access node 700 may include processor 702, RF interface circuitry 704, core network (CN) interface circuitry 706, memory/storage circuitry 708, and one or more antenna(s) 710. The processor 702 may include any type of circuitry or processor circuitry that executes or otherwise operates computer-executable instructions, such as program code, software modules, or functional processes from memory/storage circuitry 708 to cause the access node 700 to perform operations as described herein.

The components of the access node 700 may be coupled with various other components over one or more interconnects 712. The processor 702, RF interface circuitry 704, memory/storage circuitry 708 (including communication protocol stack 714), antenna(s) 710, and interconnects 712 may be similar to like-named elements shown and described with respect to FIG. 6. For example, the processor 702 may include processor circuitry such as, for example, baseband processor circuitry (BB) 716A, central processor unit circuitry (CPU) 716B, and graphics processor unit circuitry (GPU) 716C.

The CN interface circuitry 706 may provide connectivity to a core network, for example, a 5th Generation Core network (5GC) using a 5GC-compatible network interface protocol such as carrier Ethernet protocols, or some other suitable protocol. Network connectivity may be provided to/from the access node 700 via a fiber optic or wireless backhaul. The CN interface circuitry 706 may include one or more dedicated processors or FPGAs to communicate using one or more of the aforementioned protocols. In some implementations, the CN interface circuitry 706 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 700 that operates in an NR or 5G system (for example, a gNB), and the term "E-UTRAN node" or the like may refer to an access node 700 that operates in an LTE or 4G system (e.g., an eNB). According to various implementations, the access node 700 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all, or parts of the access node 700 may be implemented as one or more software entities running on server computers as part of a virtual network, which may be referred to as a CRAN and/or a virtual baseband unit pool (vBBUP). In V2X scenarios, the access node 700 may be or act as a "Roadside Unit." The term "Roadside Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

In the following section, further exemplary embodiments are provided.

Example 1 includes one or more processors of a first user equipment (UE), the one or more processors configured to cause the first UE to perform operations including: determining that a scheduled Physical Sidelink Feedback Channel (PSFCH) occasion on a sidelink unlicensed (SL-U) channel is unused, where the PSFCH occasion is associated with a previously transmitted Physical Sidelink Shared Channel (PSSCH) signal; generating a substitute signal to transmit in the PSFCH occasion; and transmitting, to a second UE via the SL-U channel, the substitute signal in the PSFCH occasion, where the first UE or the second UE initiated a channel occupancy time (COT) on the SL-U channel.

Example 2 includes the one or more processors of Example 1, where the substitute signal is a dummy PSFCH signal.

Example 3 includes the one or more processors of Example 2, where the PSFCH occasion includes a common interlace and a dedicated physical resource block (PRB), and where transmitting the substitute signal in the PSFCH occasion includes: transmitting the dummy PSFCH signal on: (i) the common interlace, or (ii) the common interlace and the dedicated PRB.

Example 4 includes the one or more processors of Example 2, where generating the substitute signal includes: generating the dummy PSFCH signal based on a cyclic shift value and a cyclic shift initialization value.

Example 5 includes the one or more processors of Example 4, where the cyclic shift value: is a predefined value, is a preconfigured value per resource pool, or depends on at least one of a source ID and a destination ID of a transmission that initiated the COT on the SL-U channel.

Example 6 includes the one or more processors of Example 4, where the cyclic shift initialization value: is a predefined value, is a preconfigured value per resource pool, depends on a number of cyclic shift pairs and at least one of a source ID and a destination ID of a transmission that initiated the COT on the SL-U channel, or depends on the number of cyclic shift pairs and time-frequency resources of the previously transmitted PSSCH signal.

Example 7 includes the one or more processors of Example 2, where the first UE is the COT initiating UE, the PSSCH signal transmitting UE, or the PSSCH signal receiving UE.

Example 8 includes the one or more processor of Example 2, the operations further including: receiving, in a sidelink control information (SCI) message and from the second UE, an indication that the first UE is to transmit the dummy PSFCH signal, where the SCI message is associated with a preceding PSSCH signal to the PSFCH occasion or with a COT initiating PSSCH transmission.

Example 9 includes the one or more processors of Example 1, where the substitute signal includes an extension of a preceding PSSCH signal to the PSFCH occasion.

Example 10 includes the one or more processors of Example 9, the operations further including: transmitting, in a sidelink control information (SCI) message and to the second UE, an indication that the preceding PSSCH signal is being extended to the PSFCH occasion.

Example 11 includes the one or more processors of Example 10, where the SCI message is a SCI Stage 1 message or a SCI Stage 2 message.

Example 12 includes the one or more processors of Example 9, where transmitting the substitute signal in the PSFCH occasion includes: transmitting the preceding PSSCH signal extension in one or more symbols of the PSFCH occasion and a gap symbol preceding the PSFCH occasion.

Example 13 includes one or more processors of a user equipment (UE), the one or more processors configured to, when executing instructions stored in a memory, perform operations including: generating a plurality of sidelink synchronization signal blocks (S-SSBs) for transmission on a sidelink unlicensed (SL-U) channel; determining, using a per S-SSB calculation, a transmission power for the plurality of S-SSBs; and instructing radio frequency (RF) circuitry to transmit the plurality of S-SSBs using the transmission power.

Example 14 includes the one or more processors of Example 13, where determining, using a per S-SSB calculation, a transmission power for the plurality of S-SSBs involves calculating, using a first equation, a first transmission power for a first subset of the plurality of S-SSBs for transmission on an anchor RB set.

Example 15 includes the one or more processors of Example 14, where the first equation depends on a number of S-SSB repetitions in the anchor RB set.

Example 16 includes the one or more processors of Example 15, where the number of S-SSB repetitions in the anchor RB set is configured by a network serving the UE.

Example 17 includes the one or more processors of Example 14, where the first equation includes a difference between a maximum transmission power of the UE ($P_{CMAX}$) and a 10-based logarithm of a number of S-SSB repetitions in the anchor RB set ($\log_{10}(N)$).

Example 18 includes the one or more processors of Example 14, where the first equation is

$$P_{S-SSB}^{anchor} = min(P_{CMAX} - 10log_{10}(N), P_{O,S-SSB} + 10log_{10}(2^\mu \cdot M_{RB}^{S-SSB} + \alpha_{S-SSB} \cdot PL))$$

, and where $P_{CMAX}$ is a maximum transmission power of the UE, N is a number of S-SSB repetitions in the anchor RB set, $P_{O,S-SSB}$ is a received power target, $\alpha_{S-SSB}$ is a power control factor, $M_{RB}^{S-SSB}$ is a number of resource blocks for S-SSB transmission, $\mu$ is subcarrier spacing (SCS), and PL is a downlink path loss.

Example 19 includes the one or more processors of Example 14, where determining, using a per S-SSB calculation, a transmission power for the plurality of S-SSBs further involves calculating, using a second equation different than the first equation, a second transmission power for a second subset of the plurality of S-SSBs for transmission on a non-anchor RB set.

Example 20 includes the one or more processors of Example 14, where determining, using a per S-SSB calculation, a transmission power for the plurality of S-SSBs further involves equally allocating between one or more non-anchor RB sets a remaining available transmission power calculated as a difference between a maximum transmission power of the UE and the first transmission power.

Example 21 includes the one or more processors of Example 13, where determining, using a per S-SSB calculation, a transmission power for the plurality of S-SSBs involves calculating, using a first equation, a first transmission power for a first subset of the plurality of S-SSBs for transmission on a non-anchor RB set.

Example 22 includes the one or more processors of Example 21, where the first equation includes a total number of RB sets allocated for S-SSB transmissions.

Example 23 includes the one or more processors of Example 21, where the first equation includes a difference between a maximum transmission power of the UE $(P_{CMAX})$ and a second transmission power allocated to an anchor RB set.

Example 24 includes the one or more processors of Example 21, where the first equation is

$$M), P_{O,S-SSB} + 10log_{10}(2^\mu \cdot M_{RB}^{S-SSB} + \alpha_{S-SSB} \cdot PL))$$

, and where $P_{CMAX}$ is a maximum transmission power of the UE, N is a number of S-SSB repetitions in an anchor RB set, M is a (total number of RB sets to be used for S-SSB transmissions - 1), $P_{O,S-SSB}$ is a received power target, $\alpha_{S-SSB}$ is a power control factor, $M_{RB}^{S-SSB}$ is a number of resource blocks for S-SSB transmission, $\mu$ is subcarrier spacing (SCS), and PL is a downlink path loss.

Example 25 includes one or more processors of a user equipment (UE), the one or more processors configured to cause the UE to perform operations including: generating a plurality of sidelink synchronization signal block (S-SSB) repetitions for transmission on a resource block (RB) set over a sidelink unlicensed (SL-U) channel; calculating a transmission power for the plurality of S-SSB repetitions based on a 10-based logarithm of a number of the S-SSB repetitions ($log_{10}$ (N)); and using the transmission power to transmit the plurality of S-SSBs over the SL-U channel.

Example 26 includes the one or more processors of Example 25, the RB set is an anchor RB set or a non-anchor RB set.

Example 27 includes the one or more processors of Example 25, where calculating a transmission power for the plurality of S-SSB repetitions based on a 10-based logarithm of a number of the S-SSB repetitions ($log_{10}$ (N)) involves calculating the transmission power based on a difference between a maximum transmission power of the UE ($P_{CMAX}$) and the $log_{10}$ (N).

Example 28 includes the one or more processors of Example 25, where calculating a transmission power for the plurality of S-SSB repetitions based on a 10-based logarithm of a number of the S-SSB repetitions (log10 (W)) involves calculating the transmission power using:

$$M_{RB}^{S-SSB} + \alpha_{S-SSB} \cdot PL))$$

, where $P_{CMAX}$ is a maximum transmission power of the UE, N is a number of S-SSB repetitions in an anchor RB set, $P_{O,S-SSB}$ is a received power target, $\alpha_{S-SSB}$ is a power control factor, $M_{RB}^{S-SSB}$ is a number of resource blocks for S-SSB transmission, $\mu$ is subcarrier spacing (SCS), and PL is a downlink path loss.

Example 29 includes the one or more processors of Example 25, where calculating a transmission power for the plurality of S-SSB repetitions based on a 10-based logarithm of a number of the S-SSB repetitions (log10 (W)) involves calculating the transmission power using:

$$M), P_{O,S-SSB} + 10log_{10}(2^\mu \cdot M_{RB}^{S-SSB} + \alpha_{S-SSB} \cdot PL))$$

, where $P_{CMAX}$ is a maximum transmission power of the UE, N is a number of S-SSB repetitions in an anchor RB set, M is a (total number of RB sets to be used for S-SSB transmissions - 1), $P_{O,S-SSB}$ is a received power target, $\alpha_{S-SSB}$ is a power control factor, $M_{RB}^{S-SSB}$ is a number of resource blocks for S-SSB transmission, $\mu$ is subcarrier spacing (SCS), and PL is a downlink path loss.

Example 30 includes the one or more processors of Example 25, the operations further including: receiving the number of S-SSB repetitions from a network serving the UE.

Example 31 includes the one or more processors of Example 30, where the number of S-SSB repetitions is received via Radio Resource Control (RRC) signaling.

Example 32 may include one or more non-transitory computer-readable media including instructions to cause an electronic device, upon execution of the instructions by one or more processors of the electronic device, to perform one or more elements of the operations described in or related to any of Examples 1-31, or any other method or process described herein.

Example 33 may include an apparatus including logic, memory, modules, and/or circuitry (e.g., processing circuitry) to perform one or more elements of the operations described in or related to any of Examples 1-31, or any other method or process described herein.

Example 34 may include a method, technique, or process as described in or related to any of Examples 1-31, or portions or parts thereof.

Example 35 may include an apparatus including: the one or more processors and memory storing instructions that when executed by the one or more processors, cause the apparatus to perform operations as described in or related to any of Examples 1-31, or portions thereof.

Example 36 may include the apparatus of Example 35, where the apparatus is a user equipment.

Example 37 may include a computer program including instructions, wherein execution of the program by the one or more processors is to cause the one or more processors to carry out the operations as described in or related to any of Examples 1-31, or portions thereof.

Example 38 may include a method of communicating in a wireless communication network as shown and described herein.

Example 39 may include a system for providing wireless communication as shown and described herein. The operations or actions performed by the system can include the operations of any one of Examples 1-31.

Example 40 may include a device for providing wireless communication as shown and described herein. The operations or actions performed by the device can include the operations of any one of Examples 1-31.

Example 41 may include a user equipment that includes the one or more processors of any one of Examples 1-31.

Example 42 may include a user equipment that is configured to perform the operations of any one of Examples 1-31.

An apparatus, e.g., a user equipment, including one or more baseband processors, and so forth, can be configured to perform particular operations or actions by virtue of having software, firmware, hardware, or a combination of them installed on the system that in operation causes or cause the system to perform the actions. The operations or actions performed either by the apparatus can include the operations of any one of Examples 1-31.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

**Claims**

1. One or more processors of a user equipment (UE), the one or more processors configured to, when executing instructions stored in a memory, perform operations comprising:

   generating a plurality of sidelink synchronization signal blocks (S-SSBs) for transmission on a sidelink unlicensed (SL-U) channel;
   determining, using a per S-SSB calculation, a transmission power for the plurality of S-SSBs; and
   instructing radio frequency (RF) circuitry to transmit the plurality of S-SSBs using the transmission power.

2. The one or more processors of claim 1, wherein determining, using a per S-SSB calculation, a transmission power for the plurality of S-SSBs comprises:
   calculating, using a first equation, a first transmission power for a first subset of the plurality of S-SSBs for transmission on an anchor RB set.

3. The one or more processors of claim 2, wherein the first equation depends on a number of S-SSB repetitions in the anchor RB set.

4. The one or more processors of claim 3, wherein the number of S-SSB repetitions in the anchor RB set is configured by a network serving the UE.

5. The one or more processors of claim 2, wherein the first equation comprises a difference between a maximum transmission power of the UE $(P_{CMAX})$ and a 10-based logarithm of a number of S-SSB repetitions in the anchor RB set $(\log_{10}(N))$.

6. The one or more processors of claim 2, wherein the first equation is:
$$P_{S-SSB}^{anchor} = min(P_{CMAX} - 10log_{10}(N), P_{O,S-SSB} + 10log_{10}(2^{\mu} \cdot M_{RB}^{S-SSB} + \alpha_{S-SSB} \cdot PL))$$
, where $P_{CMAX}$ is a maximum transmission power of the UE, N is a number of S-SSB repetitions in the anchor RB set, $P_{O,S-SSB}$ is a received power target, $\alpha_{S-SSB}$ is a power control factor, $M_{RB}^{S-SSB}$ is a number of resource blocks for S-SSB transmission, $\mu$ is subcarrier spacing (SCS), and PL is a downlink path loss.

7. The one or more processors of claim 2, wherein determining, using a per S-SSB calculation, a transmission power for the plurality of S-SSBs further comprises:
calculating, using a second equation different than the first equation, a second transmission power for a second subset of the plurality of S-SSBs for transmission on a non-anchor RB set.

8. The one or more processors of claim 2, wherein determining, using a per S-SSB calculation, a transmission power for the plurality of S-SSBs further comprises:
equally allocating between one or more non-anchor RB sets a remaining available transmission power calculated as a difference between a maximum transmission power of the UE and the first transmission power.

9. The one or more processors of claim 1, wherein determining, using a per S-SSB calculation, a transmission power for the plurality of S-SSBs comprises:
calculating, using a first equation, a first transmission power for a first subset of the plurality of S-SSBs for transmission on a non-anchor RB set.

10. The one or more processors of claim 9, wherein the first equation comprises a total number of RB sets allocated for S-SSB transmissions.

11. The one or more processors of claim 9, wherein the first equation comprises a difference between a maximum transmission power of the UE $(P_{CMAX})$ and a second transmission power allocated to an anchor RB set.

12. The one or more processors of claim 9, wherein the first equation is:

$$P_{S-SSB}^{non-anchor}(i) = min(P_{CMAX} - N \cdot P_{S-SSB}^{anchor}(i) - (N \cdot M)log_{10}(N \cdot M), P_{O,S-SSB} + 10log_{10}(2^{\mu} \cdot M_{RB}^{S-SSB} + \alpha_{S-SSB} \cdot PL)),$$

where $P_{CMAX}$ is a maximum transmission power of the UE, N is a number of S-SSB repetitions in an anchor RB set, M is a (total number of RB sets to be used for S-SSB transmissions - 1), $P_{O,S-SSB}$ is a received power target, $\alpha_{S-SSB}$ is a power control factor, $M_{RB}^{S-SSB}$ is a number of resource blocks for S-SSB transmission, $\mu$ is subcarrier spacing (SCS), and PL is a downlink path loss.

13. A user equipment (UE) comprising:

one or more processors; and
memory storing instructions that when executed by the one or more processors, cause the UE to perform operations comprising:

generating a plurality of sidelink synchronization signal block (S-SSB) repetitions for transmission on a resource block (RB) set over a sidelink unlicensed (SL-U) channel;

calculating a transmission power for the plurality of S-SSB repetitions based on a 10-based logarithm of a number of the S-SSB repetitions ($\log_{10}(N)$); and

using the transmission power to transmit the plurality of S-SSBs over the SL-U channel.

14. The UE of claim 13, wherein the RB set is an anchor RB set or a non-anchor RB set.

15. A method of performing the operations of any previous claim.

100

104                                                      102

| PSSCH/ PSCCH | PSFCH | PSSCH/ PSCCH | PSSCH/ PSCCH | PSFCH | PSSCH/ PSCCH |

|←——SLOT——→|←——SLOT——→|←——SLOT——→|←——SLOT——→|

## FIG. 1A

110

114                                                      112

| PSSCH/ PSCCH | PSFCH | PSSCH/ PSCCH | PSFCH | PSSCH/ PSCCH | PSFCH | PSSCH/ PSCCH | PSFCH |

|←——SLOT——→|←——SLOT——→|←——SLOT——→|←——SLOT——→|

## FIG. 1B

FIG. 2A

FIG. 2B

EP 4 507 398 A1

|←— SLOT —→|

S-SSB    11 RBs

20 MHz

**FIG. 3A**

|←— SLOT —→|

S-SSB    11 RBs

20 MHz

S-SSB    11 RBs

**FIG. 3B**

|←— SLOT —→|

S-SSB    11 RBs

20 MHz

S-SSB    11 RBs

20 MHz

S-SSB

S-SSB

**FIG. 3C**

**FIG. 4**

500

DETERMINING THAT A SCHEDULED PHYSICAL SIDELINK
FEEDBACK CHANNEL (PSFCH) OCCASION ON A SIDELINK
UNLICENSED (SL-U) CHANNEL IS UNUSED, WHERE THE
PSFCH OCCASION IS ASSOCIATED WITH A PREVIOUSLY
TRANSMITTED PHYSICAL SIDELINK SHARED CHANNEL
(PSSCH) SIGNAL
502

GENERATING A SUBSTITUTE SIGNAL TO TRANSMIT IN THE
PSFCH OCCASION
504

TRANSMITTING, TO A SECOND UE VIA THE SL-U CHANNEL,
THE SUBSTITUTE SIGNAL IN THE PSFCH OCCASION, WHERE
THE FIRST UE OR THE SECOND UE INITIATED A CHANNEL
OCCUPANCY TIME (COT) ON THE SL-U CHANNEL
506

# FIG. 5A

510

GENERATING A PLURALITY OF SIDELINK SYNCHRONIZATION
SIGNAL BLOCKS (S-SSBS) FOR TRANSMISSION ON A SIDELINK
UNLICENSED (SL-U) CHANNEL — 512

DETERMINING, USING A PER S-SSB CALCULATION, A
TRANSMISSION POWER FOR THE PLURALITY OF S-SSBS — 514

TRANSMITTING THE PLURALITY OF PLURALITY OF S-SSBS
USING THE TRANSMISSION POWER — 516

# FIG. 5B

520

GENERATING A PLURALITY OF SIDELINK SYNCHRONIZATION SIGNAL BLOCK (S-SSB) REPETITIONS FOR TRANSMISSION ON A RESOURCE BLOCK (RB) SET OVER A SIDELINK UNLICENSED (SL-U) CHANNEL ⟋ 522

CALCULATING A TRANSMISSION POWER FOR THE PLURALITY OF S-SSB REPETITIONS BASED ON A 10-BASED LOGARITHM OF A NUMBER OF THE S-SSB REPETITIONS $(LOG_{10}(N))$ ⟋ 524

USING THE TRANSMISSION POWER TO TRANSMIT THE PLURALITY OF S-SSBS OVER THE SL-U CHANNEL ⟋ 526

# FIG. 5C

**FIG. 6**

EP 4 507 398 A1

700

710

PROCESSOR    702

RF INTERFACE
CIRCUITRY

704

BB

716A

CPU

716B

GPU

716C

CN INTERFACE
CIRCUITRY

706

712

MEMORY/STORAGE CIRCUITRY

708

COMMUNICATION
PROTOCOL STACK

714

**FIG. 7**

Europäisches
Patentamt

European
Patent Office

Office européen
des brevets

# EUROPEAN SEARCH REPORT

Application Number

EP 24 19 1568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETER GAAL ET AL: "Physical Channel Design for Sidelink on Unlicensed Spectrum", 3GPP DRAFT; R1-2305338; TYPE DISCUSSION; NR_SL_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Incheon, KR; 20230522 - 20230526 14 May 2023 (2023-05-14), XP052310776, Retrieved from the Internet: URL:https://www.3gpp.org/ftp/TSG_RAN/WG1_R L1/TSGR1_113/Docs/R1-2305338.zip R1-2305338.docx [retrieved on 2023-05-14] | 1,2,7,9, 15 | INV. H04W52/32 H04W52/38 |
| Y | * title * * section 2.4.3.1 * | 3,4,13, 14 | |
| A | | 5,6,8, 10-12 | TECHNICAL FIELDS SEARCHED (IPC) |
| | ----- -/-- | | H04W |

The present search report has been drawn up for all claims

| Place of search | Date of completion of the search | Examiner |
|---|---|---|
| The Hague | 6 December 2024 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

EUROPEAN SEARCH REPORT

Application Number

EP 24 19 1568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WEI ZENG ET AL: "On Remaining Issues of Sidelink Physical Channel Design Framework for Unlicensed Spectrum", 3GPP DRAFT; R1-2309828; TYPE DISCUSSION; NR_SL_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xiamen, CN; 20231009 - 20231013 29 September 2023 (2023-09-29), XP052527542, Retrieved from the Internet: URL:https://www.3gpp.org/ftp/TSG_RAN/WG1_R L1/TSGR1_114b/Docs/R1-2309828.zip R1-2309828 On Remaining Issues of Sidelink Physical Channel Design Framework for Unlicensed Spectrum.docx [retrieved on 2023-09-29] | 1-11, 13-15 | |
| A,P | * title * * section 2.4 * * section 2.6 * | 12 | TECHNICAL FIELDS SEARCHED (IPC) |
| X,P | WO 2024/066989 A1 (HUAWEI TECH CO LTD [CN]) 4 April 2024 (2024-04-04) | 1-6,9, 13,14 | |
| A,P | * page 45, line 12 - page 46, line 19 * | 7,8, 10-12 | |
| Y | US 11 019 623 B2 (INTERDIGITAL PATENT HOLDINGS INC [US]) 25 May 2021 (2021-05-25) | 3,4,13, 14 | |
| A | * claim 1 * * column 34, line 32 - line 37 * | 1,2, 5-12,15 | |

The present search report has been drawn up for all claims

| Place of search | Date of completion of the search | Examiner |
|---|---|---|
| The Hague | 6 December 2024 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 19 1568

This annex lists the patent family members relating to the patent documents cited in  the above-mentioned European search report.
The members are as contained in the European Patent Office EDP file on
The European Patent Office is in no way liable for these particulars which are merely given for the purpose of information.

06-12-2024

| Patent document cited in search report | Publication date | Patent family member(s) | Publication date |
|---|---|---|---|
| WO 2024066989 A1 | 04-04-2024 | CN 117812723 A | 02-04-2024 |
|  |  | WO 2024066989 A1 | 04-04-2024 |
| US 11019623 B2 | 25-05-2021 | AU 2015211013 A1 | 18-08-2016 |
|  |  | AU 2019257505 A1 | 21-11-2019 |
|  |  | AU 2021240161 A1 | 28-10-2021 |
|  |  | CN 106233794 A | 14-12-2016 |
|  |  | CN 110809258 A | 18-02-2020 |
|  |  | EP 3100536 A1 | 07-12-2016 |
|  |  | EP 3675566 A1 | 01-07-2020 |
|  |  | EP 4075887 A1 | 19-10-2022 |
|  |  | JP 6934542 B2 | 15-09-2021 |
|  |  | JP 7296431 B2 | 22-06-2023 |
|  |  | JP 2017513260 A | 25-05-2017 |
|  |  | JP 2020061785 A | 16-04-2020 |
|  |  | JP 2021182778 A | 25-11-2021 |
|  |  | JP 2023120265 A | 29-08-2023 |
|  |  | KR 20160114688 A | 05-10-2016 |
|  |  | KR 20220051025 A | 25-04-2022 |
|  |  | US 2016353440 A1 | 01-12-2016 |
|  |  | US 2019037569 A1 | 31-01-2019 |
|  |  | WO 2015116732 A1 | 06-08-2015 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 63531749 A